Europäisches Patentamt

European Patent Office

Office européen des brevets

(11) Publication number: **0 434 839 B1**

# EUROPEAN PATENT SPECIFICATION

(45) Date of publication of patent specification: **26.10.94**   (51) Int. Cl.5: **F27B  17/00**, C04B 35/64

(21) Application number: **90902829.2**

(22) Date of filing: **08.02.90**

(86) International application number:
**PCT/JP90/00158**

(87) International publication number:
**WO 91/01474 (07.02.91 91/04)**

(54) **OXIDIZING ATMOSPHERE HOT ISOTROPIC PRESS.**

(30) Priority: **17.07.89 JP 184973/89**

(43) Date of publication of application:
**03.07.91 Bulletin  91/27**

(45) Publication of the grant of the patent:
**26.10.94 Bulletin  94/43**

(84) Designated Contracting States:
**DE FR**

(56) References cited:
JP-A- 6 323 732
JP-A- 6 348 789
JP-U-61 151 198
JP-U-61 203 298
JP-Y- 634 503

(73) Proprietor: **KABUSHIKI KAISHA
KOBESEIKOSHO**
**3-18, Wakinohama-cho 1-chome**
**Chuo-ku**
**Kobe-shi Hyogo 651 (JP)**

(72) Inventor: **TANAKA, Nobuaki E6304, 10-6,**
Kitaoogi 2-chome
Higashinada-ku
Kobe-shi
Hyogo 658 (JP)
Inventor: **FUJIKAWA, Takao 7-100-301,**
**Kaminotani 7-chome**
**Suma-ku2Kobe-shi**
**Hyogo 654-01 (JP)**
Inventor: **NARUKAWA, Yutaka 3-25-401,**
**Tonoyama-cho**
**Nishinomiya-shi**
**Hyogo 662 (JP)**
Inventor: **TAKAGI, Ikuji 2-3-1,**
**Shinoharaobanoyama-cho**
**Nada-ku**
**Kobe-shi**
**Hyogo 657 (JP)**
Inventor: **ISHII, Takahiko 37-4, Kitaochiai**
**3-chome Suma-ku**
**Kobe-shi**
**Hyogo 654-01 (JP)**

Inventor: **SUZUKI, Takeshi 12-54-803,**
**Nishimaiko 2-chome**
**Tarumi-ku**
**Kobe-shi**
**Hyogo 655 (JP)**


(74) Representative: **Türk, Gille, Hrabal, Leifert**
**Brucknerstrasse 20**
**D-40593 Düsseldorf (DE)**

## Description

TECHNICAL FIELD

The present invention relates to hot isostatic presses for use in an oxidizing atmosphere.

BACKGROUND ART

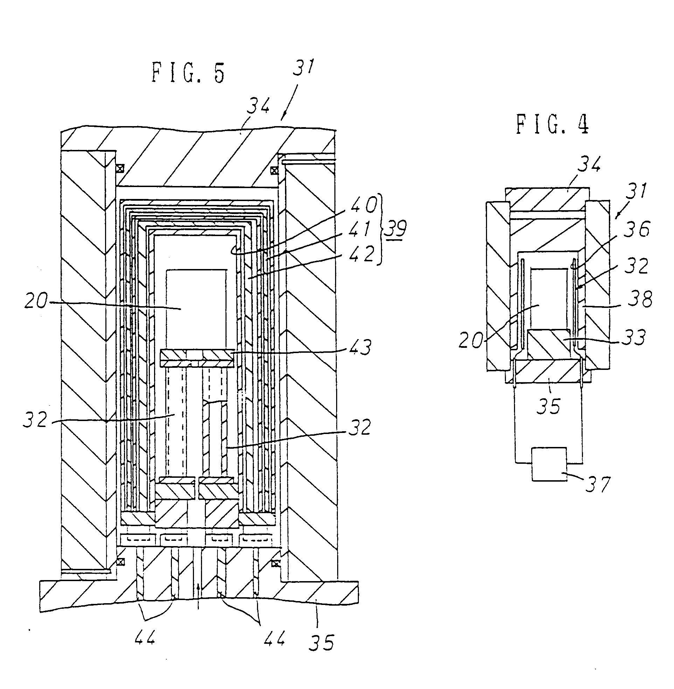

FIG. 4 shows a conventional hot isostatic press or HIP comprising a high-pressure vessel 31 for enclosing a gas of high pressure therein, a heating device 32 provided inside the vessel 31 and a support 33 for placing thereon the material to be treated. The high-pressure vessel 31 has an top closure 34 and a bottom closure 35, and the furnace 32 has a heater 36, power supply 37 and insulation mantle 38.

In the case where a material (such as graphite) having great electric resistance at low temperatures is used for the heater 36, the heater exhibits a great variation in resistance, so that the power supply 37 must be adapted to effect heating from room temperature to the effective heating temperature (about 100 times).

Usually, argon gas or like inert gas is used for the atmosphere of such HIPs to protect the heater, the material to be treated and the components.

However, when oxide ceramics are heat-treated at a high temperature, the material undergoes oxygen decomposition and deteriorates, exhibiting degradation, discoloration or impaired mechanical properties, hence an objectionable result.

To overcome the drawback, an HIP for use in an oxidizing gas atmosphere (hereinafter referred to as the "$O_2$ HIP") has been developed which operates in a mixture of argon gas and oxygen gas (hereinafter abbreviated as "$O_2$") in a volume ratio which is optimum to the particular type of material or article to be treated.

Nevertheless, with the conventional HIP of 2000°C grade wherein graphite is used for the heater, the graphite is readily oxidized in the oxygen atmosphere, rendering the heater unserviceable and forming an oxide gas on reacting with $O_2$ at a high temperature to adversely affect the material to be treated.

HIPs have been proposed in which the heating device 32 is preheated by a preheating device 39 to a temperature at which the furnace 32 can be energized (see, for example, Unexamined Japanese Patent Publication SHO 63-23732).

With reference to FIG. 5 showing such an $O_2$ HIP, the preheating device 39 comprises an inner insulation mantle 40, an outer insulation mantle 41 and a heater (metal heater) 42 interposed between these cylinders 40, 41. A bottom closure 35 has mounted thereon the preheating device 39 and a furnace 32 comprising a ceramic heater and positioned inside the inner insulation mantle 40. The workpiece 20 to be treated is placed on an insulating plate 43 on the furnace 32. Preheating and heating conductors 44 extend through the bottom closure 35 and are connected to an unillustrated power supply.

Before the energization of the furnace 32, the furnace 32 and the material 20 are preheated by the preheating device 39 in the state shown in FIG. 5. When the heating atmosphere of the furnace 32 has reached a temperature at which power can be supplied to the furnace 32, i.e., energizable temperature, current is passed through the furnace 32 to heat the atmosphere to the HIP treatment temperature.

With the latter conventional press, the preheating device 39 and the furnace 32 are accommodated in the form of concentric circles within the high-pressure vessel 31. The vessel 31 therefore has a large diameter, which makes the press large-sized in its entirety, while the vessel 31 has a complex internal construction.

Furthermore, the inner insulation mantle 40 provided between the heater 42 of the preheating device 39 and the furnace 32 has problems such as a lower preheating efficiency and a reduced treating space.

DISCLOSURE OF THE INVENTION

An object of the present invention is to provide an apparatus which has a high-pressure vessel of easily maintainable simple interior construction and which is adapted to perform a hot isostatic press forming operation in an enlarged treating chamber having an oxidizing atmosphere with a high preheating efficiency.

The present invention provides an apparatus for subjecting a material 14 to an isostatic high pressure in an oxidizing atmosphere at a high temperature within a high-pressure vessel 1 equipped with a furnace 4, the furnace comprising a heater 6 made of an oxidation-resistant material having great electric resistance at low temperatures. To fulfill the above object, the apparatus has the following technical means.

First, the apparatus is characterized in that the furnace 4 comprises a heat insulation mantle 5 in the form of an inverted cup and provided around the heater 6, the heater 6 being disposed in the upper portion

3

of the interior of the heat insulation mantle 5, a preheater 7 being disposed in the lower portion of the interior of the heat insulation mantle 5 and positioned under the heater 6.

In addition to the first feature, the present apparatus has another feature that a second heat insulation mantle 105 having the heater 6 enclosed therein is provided between the heater 6 and the first insulation mantle 5 in the form of an inverted cup.

According to the first feature of the present invention, the preheater 7 is energized with the material 14 accommodated inside the inverted cuplike heat insulation mantle 5 to directly preheat the furnace 4 to a temperature at which the heater 6 can be energized.

In this case, the preheater 7 is positioned under the heater 7 to utilize convection and achieve an improved heating efficiency. The heat insulation mantle 5 surrounding the preheater attains improved heat insulation.

After the furnace 5 has been heated to the energizable temperature, current is passed through the heater 6 to heat the workpiece 14 to the contemplated treating temperature, and the material is subjected to an isostatic high pressure in an oxidizing atmosphere for press forming.

In this case, the energization of the preheater 7 may be continued or interrupted. In any case, the treating chamber is uniformly heated as controlled.

Even if the treating chamber has an oxidizing atmosphere, the heater 6 and the preheater 7 are made of an oxidation-resistant material and are therefore operable for the treatment.

According to the second feature of the invention in addition to the above first feature, the heat insulation mantle has a double wall, i.e., the first heat insulation mantle 5 and the second heat insulation mantle 105. Whereas the second layer 105 for use at high temperature needs to be made of a ceramic which is susceptible to thermal shock, the layer 105 can be provided locally inside the furnace with respect to the vertical direction along which the temperature varies greatly. This renders the second heat insulation mantle 105 for high temperature use less susceptible to thermal shock to assure the mantle 105 of a prolonged life.

The low-temperature region of the apparatus is provided with the first heat insulation mantle 5 which has a reduced thickness corresponding to the temperature. This gives a larger diameter to the space available, ensuring increased freedom in designing the apparatus.

BRIEF DESCRIPTION OF THE DRAWINGS

FIG. 1 is an elevation in section of a first embodiment of the invention;
FIG. 2 is an elevation in section of a second embodiment of the invention;
FIG. 3 is an elevation in section of a third embodiment of the invention; and
FIGS. 4 and 5 are elevations in section of conventional presses.

BEST MODE OF CARRYING OUT THE INVENTION

Embodiments of the present invention will be described below with reference to the drawings.

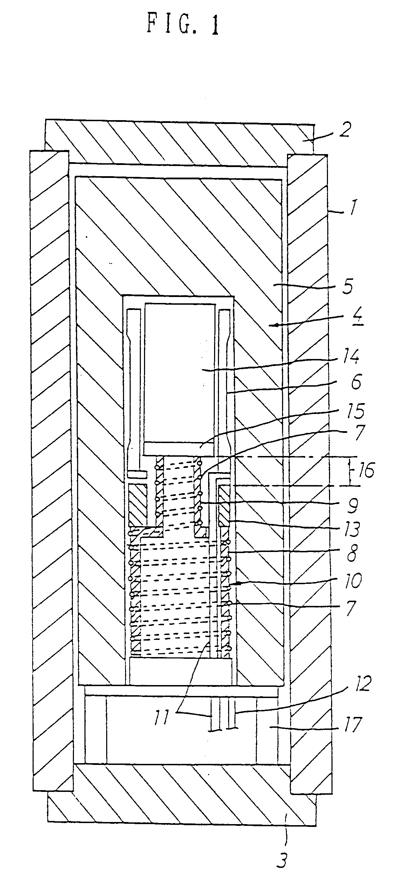

With reference to FIG. 1 showing a first embodiment of the invention, indicated at 1 is a high-pressure vessel having an top closure 2 and a bottom closure 3 fitted respectively in upper and lower openings thereof removably with an unillustrated seal provided around each opening.

Indicated at 4 is an HIP furnace which comprises a heat insulation mantle 5 in the form of an inverted cup and a heater 6 housed in the upper portion of the interior of the heat insulation mantle 5. With the present embodiment, the heat insulation mantle 5 is supported on a support frame 17 attached to the bottom closure 3 and is removable through the upper opening of the vessel 1.

The heat insulation mantle 5 and the heater 6 are made of an oxidation-resistant material, such as $ZrO_2$, having a negative coefficient of volume specific resistance (having great electric resistance at low temperatures.

Especially it is desirable that the heat insulation mantle 5 be made of porous $ZrO_2$ having a lower density than the heater 6 and thereby given improved heat insulating properties and increased resistivity so as to be serviceable as an electric insulator.

Indicated at 7 is a preheater positioned under the HIP heater 6 and accommodated in the lower portion of the interior of the heat insulation mantle 5. The preheater 7 in the present embodiment comprises a heating wire of Pt-Ph alloy and helically wound around a support member 10 having a large-diameter tubular portion 8 and a small-diameter tubular portion 9.

The preheater 7 is made of an oxidation-resistant material which can be a metal, ceramic or the like. Pt-Ph alloy (platinum-rhodium alloy) is easy to work and can be adapted to generate heat in a high pressure ($2000$ kgf/cm$^2$) to about $1600\,^{\circ}$C.

Indicated at 11 are lead wires of platinum or the like for the heater 6, and at 12 lead wires of the preheater 7. These wires are connected to an unillustrated power supply.

An electric insulator 13 is in the form of a hollow cylinder, and is supported by the shoulder portion of the support member 10 and fitted around the small-diameter portion.

Indicated at 14 is the material to be treated which is accommodated inside the heater 6 and placed on a support 15 on the support member 10.

At the junction of the heater 6 and the lead wires (electrode rods) 11, the temperature of the heater 6 drops. To compensate for this, the lower portion of the heater 6 is lapped over the upper portion of the preheater 7 as indicated at 16 axially of the container (in the direction of height) so that the preheater 17 assists in heating the treating chamber during HIP treatment to ensure uniform heating.

The heater 6 can be made of $ZrO_2$ which is prepared by adding CaO or $Y_2O_3$ as an oxidizing agent to an oxide ceramic material and sintering the mixture.

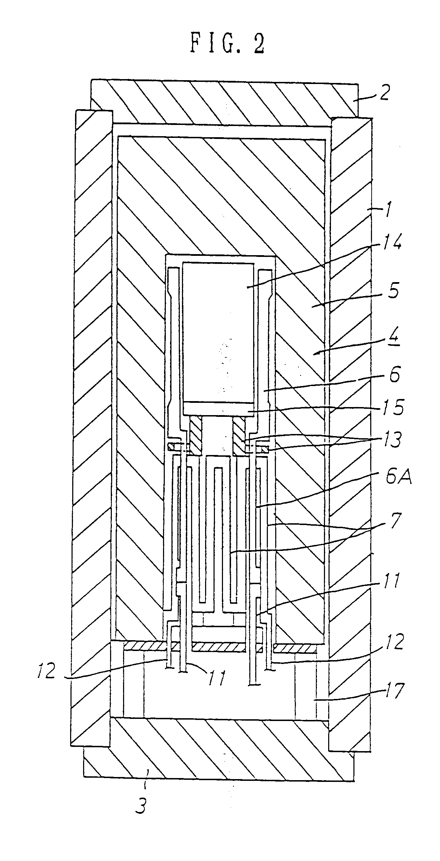

FIG. 2 shows a second embodiment of the present invention which is substantially the same as the first embodiment. Throughout FIGS. 1 and 2, like parts are designated by like reference numerals. The HIP heater 6 has a constricted portion 6A beyond which the heater further extends downward. The preheater 7 extends zigzag in the form of a hollow cylinder and has an electric insulator 13 supported thereon. The treating chamber and the region therebelow can be uniformly heated by the arrangement described.

Listed below are examples of materials for the HIP heater 6 and examples of materials for the preheater 7 in combination for use in the first and second embodiments, and operating conditions concerned.

| Ex. | Material of HIP heater | Required preheating temp. (°C) | Material of preheater | Maximum preheating temp. (°C) |
|---|---|---|---|---|
| 1 | $ZrO_2$ | 1200 | Ir | 1800 |
| 2 | | | Pt-Rh | 1600 |
| 3 | | | $MoSi_2$ | 1600 |
| 4 | | | Pt | 1400 |
| 5 | | | SiC | 1400 |
| 6 | $ZrO_2$ | 1200 | Fe-Al-Cr | 1200 |
| 7 | ThO2 | 1800 | Ir | 1800 |

The high pressure gas to be used is a mixture of an inert gas, such as argon gas, and oxygen gas admixed therewith in a volume ratio optimum to the particular kind of material 14 to be treated to form an oxidizing atmosphere inside the high-pressure vessel 1.

The axial force to be exerted during the press treatment is borne by a truck frame and a swivel frame in engagement with the upper and lower surfaces of the top closure 2 and the bottom closure 3.

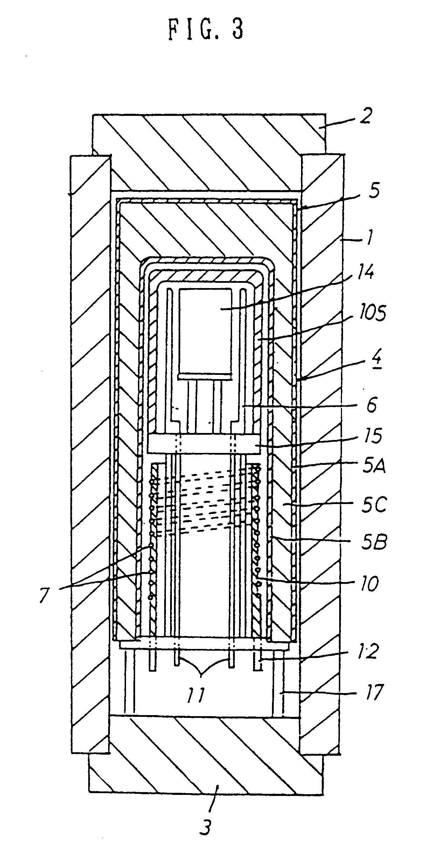

FIG. 3 shows a third embodiment of the present invention, in which a first heat insulation mantle 5 for use at low temperatures (up to 1200°C in the highest temperature) or medium temperatures (1200°C to 1500°C in the highest temperature) comprises an outer layer 5A of SUS304, an inner layer 5B of SiO, $Al_2O_3$ or the like, and a heat insulating member 5C made of a ceramic fiber as of $CAAl_2O_3$ or $SiO_2$ and interposed between the outer and inner layers. Provided between the first heat insulation mantle 5 and a heater 6 is a second heat insulation mantle 105 having the heater 6 enclosed therein and made primarily of zirconia, yttria or the like for use at high temperatures (not lower than 1500°C in the highest temperature). With the exception of these features, the third embodiment is the same as the first embodiment, so that like parts are referred to by like numerals.

Although not shown, the feature of the second embodiment described can be incorporated into the third embodiment of FIG. 3.

In any of the above embodiments, the material 14 to be treated, the heating device 4, etc. are placed into and brought out of the vessel 1 after removing the upper closure 2, whereas the interior of the vessel may be made accessible through the lower opening.

Next, the operation of the foregoing embodiments, chiefly that of the first embodiment, will be described. The top closure 2 is removed, the workpiece 14 to be treated is placed into the high-pressure vessel 1, the heating device 4 is so placed into the vessel 1 as to surround the material, and the top closure 2 is closed.

Before the energization of the heater 6 of the furnace 4, the preheater 7 is energized to heat the furnace 4 to a temperature at which current can be passed therethrough.

In raising the temperature in this way, the heat insulation mantle 4 assures effective heat insulation and permits convection to raise the temperature rapidly, while the furnace can be preheated directly, hence an improved efficiency.

After the device has been heated to a predetermined temperature, the heater 6 is energized, and the material is subjected to a high isostatic pressure at a high temperature in an oxidizing atmosphere. Since each of the heater 6 and the preheater 7 is made of an oxidation-resistant material, the HIP treatment can be conducted in the oxidizing atmosphere without permitting the heater to undergo a vigorous reaction with $O_2$, whereby the material 14 can be pressed into a sintered body with good stability at the high temperature.

When the preheater 7 is held energized during the HIP treatment, the interior of the treating chamber can be controlled for uniform heating by the heater 6 and the preheater 7. Especially, the preheater assures uniform heating effectively by convection.

When the preheater 7 is disposed under the heater 6 with the lap 16 formed therebetween, the preheater 7 assists in heating reliably to heat the treating chamber more effectively.

On completion of the specified treatment, the heater 6 and the preheater 7 are deenergized, and the heating device 4 is removed through the upper opening, followed by the removal of the sintered body.

The present invention described has the following advantages.

The heater of the furnace and the preheater are each made of an oxidation-resistant material and therefore permits HIP treatment in an oxidizing atmosphere.

The heater of the furnace is disposed inside the upper portion of the inverted cuplike heat insulation mantle, and the preheater is accommodated inside the heat insulation mantle and positioned under the heater. This arrangement makes it possible not only to preheat the furnace by convection with an improved efficiency but also to control the treating chamber for uniform heating in order to give a sintered body with good stability at a high temperature.

Furthermore, the arrangement wherein the heater and the preheater are disposed one above the other inside the heat insulation mantle makes the interior construction of the high-pressure vessel simple and the apparatus compact in its entirety notwithstanding that the treating chamber can be of a large size.

Further according to the invention, the heat insulation mantle has a double-wall construction. Although the second heat insulation mantle 105 for use at high temperatures needs to be made of a ceramic which is susceptible to thermal shock, the layer 105 can be provided only locally inside the furnace with respect to the vertical direction along which the temperature varies greatly. This renders the second heat insulation mantle 105 for high temperature use less susceptible to thermal shock to assure the layer 105 of a prolonged life.

The low-temperature region of the apparatus is provided with the first heat insulation mantle which has a reduced thickness corresponding to the temperature. This gives a larger diameter to the space available, ensuring increased freedom in designing the apparatus.

The present invention having the foregoing advantages is useful for subjecting materials, such as oxide ceramics, to HIP treatment in an oxidizing atmosphere.

FIELD OF INDUSTRIAL APPLICATION

The present invention relates to hot isostatic presses for use in an oxidizing atmosphere for treating materials, such as $ZrO_2$, $Al_2O_3$, MgO and like oxide ceramics, by applying an isostatic pressure to the material.

| | |
|---|---|
| 1 | high-pressure vessel |
| 4 | heating device |
| 5 | insulation mantle |
| 6 | heater |
| 7 | preheater |
| 14 | material to be treated |
| 16 | lap |

6

EP 0 434 839 B1

105    second insulating mantle

## Claims

1. An apparatus for subjecting a workpiece (14) to an isostatic high pressure in an oxidizing atmosphere at a high temperature within a high-pressure vessel (1) equipped with a heating device (4), the furnace comprising a heater (6) made of an oxidation-resistant material having great electric resistance at low temperatures, wherein the furnace (4) comprises a heat insulation mantle (5) in the form of an inverted cup and provided around the heater (6), the heater (6) being disposed in the upper portion of the interior of the heat insulation mantle (5), a preheater (7) being disposed in the lower portion of the interior of the heat insulation mantle (5) and positioned under the heater (6).

2. An apparatus for subjecting a material (14) to an isostatic high pressure in an oxidizing atmosphere at a high temperature within a high-pressure vessel (1) equipped with a heating device (4), the furnace comprising a heater (6) made of an oxidation-resistant material having great electric resistance at low temperatures, wherein the heating device (4) comprises a first heat insulation mantle (5) in the form of an inverted cup and provided around the heater (6), the heater (6) being disposed in the upper portion of the interior of the first heat insulation mantle (5), a second heat insulation mantle (105) being provided between the heater (6) and the first heat insulation mantle (5) and having the heater (6) enclosed therein, a preheater (7) being disposed in the lower portion of the interior of the first heat insulation mantle (5) and positioned under the heater (6).

3. An apparatus as defined in claim 1 or 2 wherein the lower portion of the heater (6) and the upper portion of the preheater (7) have a lap (16) over each other axially of the vessel.

## Patentansprüche

1. Eine Vorrichtung, um ein Werkstück (14) einem isostatischen hohen Druck unter einer oxydierenden Atmosphäre bei hoher Temperatur in einem Hochdruckkessel (1) zu unterwerfen, welcher mit einem Heizofen (4) ausgerüstet ist, wobei dieser Heizofen einen Heizkörper (6) aufweist, welcher aus einem oxydationsfesten Werkstoff hergestellt ist, der einen hohen elektrischen Widerstand bei niedrigen Temperaturen aufweist, wobei dieser Heizofen (4) einen Wärme isolierenden Mantel (5) in Form einer umgestülpten Schale enthält, welcher um den Heizkörper (6) angeordnet ist und dieser Heizkörper (6) im oberen Teil der Innenseite des Wärme isolierenden Mantels (5) angeordnet ist und ein Vorwärmer (7) in dem unteren Teil der Innenseite des Wärme isolierenden Mantels (5) unterhalb des Heizkörperes (6) vorgesehen ist.

2. Eine Vorrichtung, um ein Werkstück (14) einem isostatischen hohen Druck unter einer oxydierenden Atmosphäre bei hoher Temperatur in einem Hochdruckkessel (1) zu unterwerfen, welcher mit einem Heizofen (4) ausgerüstet ist, wobei dieser Heizofen einen Heizkörper (6) aufweist, welcher aus einem oxydationsfesten Werkstoff hergestellt ist, der einen hohen elektrischen Widerstand bei niedrigen Temperaturen aufweist, wobei dieser Heizofen (4) einen ersten Wärme isolierenden Mantel (5) in Form einer umgestülpten Schale enthält, welcher um den Heizkörper (6) angeordnet ist und dieser Heizkörper (6) im oberen Teil der Innenseite des ersten Wärme isolierenden Mantels (5) angeordnet ist, und ein zweiter Wärme isolierender Mantel (105) zwischen dem Heizkörper (6) und dem ersten Wärme isolierenden Mantel (5) vorgesehen ist, welche den Heizkörper (6) umschließen, und in der ein Vorwärmer (7) in dem unteren Teil der Innenseite des ersten Wärme isolierenden Mantels (5) unterhalb des Heizkörperes (6) vorgesehen ist.

3. Vorrichtung nach einem der Ansprüche 1 oder 2, in der der untere Teil des Heizkörperes (6) und der obere Teil des Vorwärmers (7) eine gegenseitige Überlappung (16) in axialer Richtung in Bezug auf den Hochdruckkessel aufweisen.

## Revendications

1. Un appareil pour soumettre une pièce (14) à une haute pression isostatique dans une atmosphère oxydante à haute température dans un récipient à haute pression (1) équipé d'un dispositif de chauffe (4), le four comprenant des moyens de chauffage (6) réalisés en matériau résistant à l'oxydation,

7

possédant une grande résistance électrique à basse température, dans lequel le four (4) comprend une enveloppe d'isolation thermique (5) en forme de cloche ou de coupelle renversée et disposée autour des moyens de chauffage (6), les moyens de chauffage (6) étant disposés dans la partie supérieure interne de l'enveloppe d'isolation thermique (5), un préchauffeur (7) étant disposé dans la partie inférieure interne de l'enveloppe d'isolation thermique (5) et placé sous les moyens de chauffage (6).

2. Un appareil pour soumettre un matériau (15) à une haute pression isostatique dans une atmosphère oxydante à haute température dans un récipient à haute pression (1) équipé d'un dispositif de chauffe (4), le four comprenant des moyens de chauffage (6) réalisés en matériau résistant à l'oxydation possédant une grande résistance électrique à basse température, dans lequel le dispositif de chauffe (4) comprend une première enveloppe d'isolation thermique (5) en forme de cloche ou de coupelle renversée et disposée autour des moyens de chauffage (6), les moyens de chauffage (6) étant disposés dans la partie supérieure interne de la première enveloppe d'isolation thermique (5), une seconde enveloppe d'isolation thermique (105) étant prévue entre les moyens de chauffage (6) et la première enveloppe d'isolation thermique (5) dans laquelle les moyens de chauffage (6) sont enfermés à l'intérieur, un préchauffeur (7) étant disposé dans la partie inférieure interne de la première enveloppe d'isolation thermique (5) et placé au dessous des moyens de chauffage (6).

3. Un appareil tel que défini dans les revendications 1 ou 2, dans lequel la partie inférieure des moyens de chauffage (6) et la partie supérieure du préchauffeur (7) se recouvrent mutuellement (16) dans la direction axiale du récipient.

EP 0 434 839 B1

FIG. 1

EP 0 434 839 B1

FIG. 2

10

# FIG. 3

FIG. 5

FIG. 4